**Europäisches Patentamt**

**European Patent Office**

**Office européen des brevets**

(11) Veröffentlichungsnummer: **0 439 047 A1**

## EUROPÄISCHE PATENTANMELDUNG

(21) Anmeldenummer: **91100409.1**

(22) Anmeldetag: **15.01.91**

(51) Int. Cl.5: **B62J 6/20**, B62B 15/00, F21V 8/00

(30) Priorität: **26.01.90 DE 4002353**

(43) Veröffentlichungstag der Anmeldung: **31.07.91 Patentblatt 91/31**

(84) Benannte Vertragsstaaten: **AT BE CH DE DK FR GB IT LI LU NL**

(71) Anmelder: **Kunze, Peter**
**Hohenaschauer Strasse 82**
**W-8000 München 80(DE)**

Anmelder: **Nadler, Thomas**
**Mayrfelsstrasse 19**
**W-8000 München 19(DE)**

(72) Erfinder: **Kunze, Peter**
**Hohenaschauer Strasse 82**
**W-8000 München 80(DE)**
Erfinder: **Nadler, Thomas**
**Mayrfelsstrasse 19**
**W-8000 München 19(DE)**

(74) Vertreter: **Bohnenberger, Johannes, Dr. et al**
**Meissner, Bolte & Partner**
**Widenmayerstrasse 48 Postfach 86 06 24**
**W-8000 München 86(DE)**

(54) **Spritzschutz für Fahrräder.**

(57) Es wird ein Schutzblech für Fahrräder aufgezeigt, das einen Körper (10) aufweist, der am Fahrradrahmen bzw. an einer Fahrradgabel so befestigbar ist, daß er in der an sich bekannten Weise in einem im wesentlichen konstanten Abstand zum Fahrradreifen über einen definierten Winkelbereich diesen umgebend fixiert ist. Zur Erhöhung einer Warn- und Signalwirkung wird vorgeschlagen, den Körper mit eingearbeiteten Signalflächen (11-13) auszustatten und aus einem Kunststoffmaterial zu fertigen, das einen fluoreszierenden (Tageslicht-) Farbstoff enthält und derart lichtdurchlässig oder lichtleitend ist, daß einfallendes Licht im Körper (10) weiterleitbar und mindestens teilweise an den Signalflächen (11-13) wieder abstrahlbar ist. Als Signalflächen können beispielsweise die Ränder oder Schmalseiten des Körpers dienen, welche im Gegensatz zu den glatten anderen Flächen (14,15) des Körpers rauh ausgebildet sind.

Fig. 1

## SPRITZSCHUTZ FÜR FAHRRÄDER

Die Erfindung betrifft einen Spritzschutz für Fahrräder nach dem Oberbegriff des Patentanspruches, wie er allgemein als "Schutzblech" bezeichnet wird und für Vorder- sowie Hinterräder von Fahrrädern allgemein Verwendung findet.

Es ist bekannt, daß man Schutzbleche aus rinnenförmig geprägten Blechen oder in diese Form gebrachten Kunststofformlingen herstellen kann. Diese werden mittels Schrauben und/oder Klammern am Fahrrad angebracht. Die bekannten Schutzbleche aus Metall haben den Nachteil, daß sie sich sehr leicht verbiegen und nur schwer, vor allem aber nicht akkurat, zurechtgebogen werden können. Spritzschutzeinrichtungen aus Kunststoff brechen leicht.

Weiterhin ist es bekannt, daß man auf den Spritzschutz Signalflächen wie Katzenaugen, Leuchtfarbe-Streifen oder dergleichen aufschrauben oder kleben kann, um eine erhöhte passive Sicherheit für den Benutzer zu bieten. Die Wirkung dieser Signalflächen ist jedoch nur ungenügend und meist auch nur vorübergehend, da derartige Signalflächen oftmals mutwillig oder versehentlich beschädigt oder entfernt werden, zumindest aber in verschmutztem Zustand keine oder nur noch eine geringfügige Wirkung ausüben. Dies gilt ganz besonders für Leuchtfarbe-Streifen, welche ihre positive Wirkung insbesondere in der Dämmerung entfalten, während Katzenaugen oder dergleichen nur dazu geeignet und gedacht sind, Licht im wesentlichen direkt in die Richtung zurückzuwerfen, in der es einfällt.

Ein Schutzblech der eingangs genannten Art ist aus der DE-OS 16 80 844 bekannt. Auch dieses Schutzblech weist aber die oben genannten Nachteile auf.

Der Erfindung liegt die Aufgabe zugrunde, einen Spritzschutz oder Schutzblech der eingangs genannten Art dahingehend weiterzubilden, daß in einfacher Weise eine verbesserte Signal- und Schutzwirkung erzielbar ist.

Diese Aufgabe wird durch die im Kennzeichen des Hauptanspruches angegebenen Merkmale gelöst, also durch die Verwendung eines bestimmten Materials, wie es an sich aus der DEZ Technische Rundschau Nr. 36/1988, S. 15: Bayer-Forschung "Kunststoff sammelt Licht" bekannt ist. Das Material wird in dieser Druckschrift als "Lisa-Kunststoffplatte" bezeichnet. Ein technisch bedeutsamer Punkt bei diesem Material liegt darin, daß natürliches Licht, das unter anderem einen hohen UV-Anteil enthält, über eine relativ große Fläche in das Kunststoffmaterial eintreten kann, dort nach den Gesetzen, denen auch die Lichtfortleitung im Lichtleiter unterliegt, weitergeleitet wird, wobei auch gleichzeitig eine Umsetzung der kurzwelligen (nicht sichtbaren) Lichtstrahlung in sichtbares Licht erfolgt, woraufhin das mit einer geringen Leuchtdichte einfallende Licht im Bereich der Signalflächen mit einer hohen Leuchtdichte wieder austritt.

Wenn man den Spritzschutz als Kunststoffband ausbildet, dessen Ränder im Gegensatz zu den Außen- und Innenflächen eine vorbestimmte Oberflächenrauhigkeit aufweisen, so leuchten in der Dämmerung die Ränder sehr stark, da das über die glatten Flächen einfallende Licht innerhalb des Bandes zwischen den Außenflächen hin und her reflektiert und bis zu den Rändern geleitet wird, wo es dann aufgrund der Oberflächenrauhigkeit als diffuses Licht austritt. Dieses starke Leuchten führt zu einer äußerst wirksamen Signalwirkung.

Die bandförmige Ausbildung hat weiterhin den Vorteil, daß die Herstellungskosten äußerst gering sind. Eine Verformung oder ein Abbrechen des Spritzschutzes geschieht nur bei extremer Belastung, da die sonst bei Kunststofformteilen üblichen starken Krümmungsradien mit ihrer Kerbwirkung fehlen.

Die über die Ränder des Spritzschutzes erzielbare Signalwirkung läßt sich dadurch verstärken, daß die Ränder nicht nur rauh sondern auch in einem Winkel zur Außenfläche ausgebildet sind, der von 90° verschieden ist. Wenn beispielsweise die Ränder angefast sind, und zwar derart, daß der zur Außenfläche gebildete Winkel größer als 90° ist, so können die Ränder und damit das aus diesen austretende Licht auch direkt von hinten ebenso wie von vorn und von den Seiten gesehen werden. Eine ähnliche Wirkung ist dadurch erzielbar, daß die Ränder abgerundet ausgebildet werden.

Die Herstellung ist besonders einfach, da sich eine vorbestimmte Oberflächenrauhigkeit bereits durch das Sägen von Bandmaterial und ein gegebenenfalls nachfolgendes Schleifen der Sägekanten ergibt. Es ist somit, was die Ränder betrifft, kein zusätzlicher Arbeitsgang zur Anbringung der Signalflächen notwendig.

Zusätzlich zu den Rändern können insbesondere am hinteren bzw. unteren Ende des Vorder- bzw. Hinter-Schutzbleches aufgerauhte Flächen in beliebiger Form geschaffen werden. Diese leuchten dann ebenfalls, wobei ein einfaches Anschleifen der ansonsten glatten Körperoberfläche genügt.

Weitere für wesentlich erachtete Merkmale ergeben sich aus den Unteransprüchen sowie der nachfolgenden Beschreibung bevorzugter Ausführungsformen der Erfindung. Diese werden anhand der beiliegenden Abbildungen näher erläutert. Hierbei zeigen

| | |
|---|---|
| Fig. 1 | eine schematisierte Draufsicht auf einen Spritzschutz für das Vorderrad, |
| Fig. 2 | einen Schnitt entlang der Linie II-II aus Fig. 1, |
| Fig. 3 | eine Abschnitts-Draufsicht auf eine bevorzugte Ausführungsform der Erfindung, |
| Fig. 4 | einen Schnitt entlang der Linie IV-IV aus Fig. 3, |
| Fig. 5 | einen Querschnitt durch eine weitere Ausführungsform der Erfindung, |
| Fig. 6 | eine Draufsicht ähnlich der nach Fig. 1 auf einen Spritzschutz für ein Hinterrad, und |
| Fig. 7 | einen Schnitt entlang der Linie VII-VII aus Fig. 6. |

Der in den Abbildungen gezeigte Spritzschutz umfaßt einen bandförmigen Körper 10, der aus einem durchsichtigen Kunststoff, insbesondere aus einem organischen Glas, wie einem Acrylglas, PVC oder einem Aminoplast besteht. Es kommt also darauf an, daß eine geringe Dämpfung des Lichtes erfolgt, welches im Körper fortgeleitet wird. Der Kunststoff ist mit einer Tagesleuchtfarbe gefüllt bzw. eingefärbt (z.B. Rhodamin, Fluorescein oder dergleichen), der die Eigenschaft aufweist, kurzwelliges in längerwelliges Licht, also UV-Strahlung in sichtbares Licht umzuwandeln.

Der bandförmig ausgebildete Körper weist eine Außenfläche 14, eine dazu im wesentlichen parallele Innenfläche 15 und zwei Seitenflächen 11 und 12 auf. Die Definition "außen" und "innen" bezieht sich auf den am Fahrrad montierten Zustand.

Die Außenfläche 14 und die Innenfläche 15 sind glattflächig, gegebenenfalls poliert ausgebildet, so daß innerhalb des bandförmigen Körpers laufende Lichtwellen zwischen den Flächen 14 und 15 wie bei einem Lichtleiter hin und her reflektiert werden, so lange der Winkel zwischen Lichtwelle und Oberfläche entsprechend den Materialeigenschaften (Brechungsindex) spitz genug ist.

Die Seitenflächen oder -ränder 11, 12 sind rauh ausgebildet, was im wesentlichen dem Zustand nach dem Sägen gegebenenfalls mit einer nachfolgenden Glättung durch Schleifen entspricht. Dies bedeutet, daß an diesen Flächen der allergrößte Teil des innerhalb des Körpers laufenden Lichtes austritt.

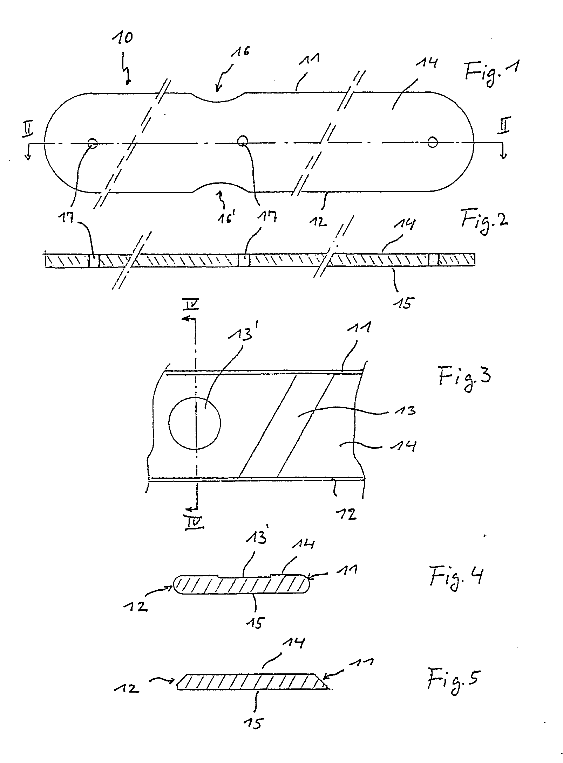

Der Körper 10 des Spritzschutzes nach Fig. 1 weist Einkerbungen 16, 16' für die Vorderradgabel sowie Bohrungen 17 zur Befestigung des Spritzschutzes am Fahrrad auf.

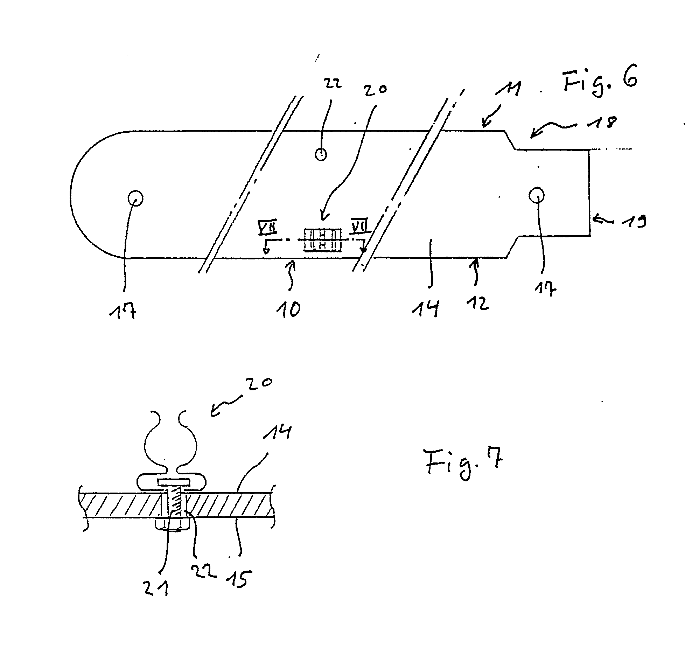

Bei dem in Fig. 6 gezeigten Spritzschutz für das Hinterrad eines Fahrrades ist über Ausnehmungen 18 eine endseitige schmalere Lasche 19 gebildet, mit welcher der Spritzschutz im Bereich der Tretkurbel am Fahrradrahmen befestigt wird.

Zur Fixierung des hinteren Spritzschutzes im Bereich der Sattelstrebe dienen Klammern 20, die über Schraubbolzen 21 in Bohrungen 22 des Körpers 10 befestigt sind.

Die Ränder 11 und 12 sind vorzugsweise nicht exakt senkrecht zu den Flächen 14/15 ausgebildet, sondern abgerundet (Fig. 4) oder angefast (Fig. 5). Dadurch sind diese Flächen auch dann sichtbar, wenn man senkrecht auf die Oberfläche 14 des Spritzschutzes blickt bzw. von vorn oder von hinten auf das Fahrrad sieht, an welchem ein derartiger Spritzschutz montiert ist. Zur Verdeutlichung dieser Tatsache wird auf Fig. 3 verwiesen.

Eine erhöhte Signal- und Warnwirkung kann durch aufgerauhte (angeschliffene oder angefräste) Flächenabschnitte 13, 13' erzielt werden, die gemäß den Fig. 3 und 4 in die Oberfläche 14 des Körpers 10 eingearbeitet sind. Die Form dieser Flächen ist beliebig wählbar und richtet sich in erster Linie nach den üblichen Sicherheitskriterien bzw. den bekannten psychooptischen Erkenntnissen. So zum Beispiel eignen sich schräg zu den Seitenrändern 11, 12 verlaufende Streifen 13 (Fig. 3) besser als gerade verlaufende Streifen, da diese eine erhöhte Aufmerksamkeit auf sich lenken.

Es ist möglich, die Innenfläche 15 mit einem Material zu beschichten, welches einen, vom Körper 10 stark verschiedenen Brechungsindex aufweist, wie dies aus dem Bereich der Lichtleiter-Fertigung an sich bekannt ist. Dadurch wird die Reflexion des im Körper 10 hin und her reflektierten Lichtes auch dann nicht beeinträchtigt, wenn die Innenfläche des Spritzschutzes verschmutzt oder voller Wassertropfen ist.

Es läßt sich weiterhin auch die Außenfläche 14 des Körpers 10 mit einem durchsichtigen Kunstharz beschichten, dessen Brechungsindex verschieden von dem des Körpers 10 ist, so daß einerseits Umgebungslicht im wesentlichen ungehindert in den Körper 10 eintreten, andererseits aber bei einer Verschmutzung der Außenfläche nur noch die Grenzschicht zwischen der Beschichtung und dem Körper 10 als Reflexionsschicht Bedeutung hat.

Da aber bekanntlich Kunststoffe mit glatten Oberflächen ohnehin nicht sehr stark zur Verschmutzung neigen, insbesondere aber Wasser abperlt, genügt in den meisten Fällen eine unbeschichtete Ausführungsform. Selbstverständlich ist es auch möglich, die Innenfläche 15 zu verspiegeln, was die ästhetische Wirkung des Spritzschutzes und auch dessen Lichtleit-Wirkung in an sich bekannter Weise verändert.

Selbstverständlich ist es an sich auch möglich, den Spritzschutz in einer gewölbten Form ähnlich einem herkömmlichen Fahrradschutzblech zu fertigen. In diesem Fall ist allerdings darauf zu achten, daß allzu geringe Krümmungsradien vermieden werden, da diese zum einen die geforderte Stabilität verringern, zum anderen die Lichtleit-Wirkung verschlechtern würden.

**Patentansprüche**

1. Spritzschutz oder Schutzblech für Fahrräder, umfassend einen Körper mit einer Außenfläche, einer dazu im wesentlichen parallelen Innenfläche und zwei Seitenflächen, wobei der Körper an einem Fahrradrahmen oder an einer Fahrradvordergabel so befestigbar ist, daß er in einem im wesentlichen konstanten Abstand zu einem Fahrradreifen über einen definierten Winkelbereich diesen umgebend fixiert ist und Signalflächen aufweist,
   **dadurch gekennzeichnet,**
   daß der Körper (10) aus einem an sich bekannten Kunststoffmaterial gefertigt ist, das einen fluoreszierenden Farbstoff enthält und derart lichtdurchlässig oder lichtleitend ist, daß einfallendes Licht im Körper (10) weiterleitbar und mindestens teilweise an den am Körper (10) vorgesehenen Signalflächen (11 - 13) wieder abstrahlbar ist.

2. Spritzschutz nach Anspruch 1,
   dadurch **gekennzeichnet,**
   daß die Signalflächen (11 - 13) mit einer definierten Oberflächenrauhigkeit, wohingegen alle übrigen Abschnitte des Körpers (10) glattflächig ausgebildet sind.

3. Spritzschutz nach einem der vorhergehenden Ansprüche,
   dadurch **gekennzeichnet,**
   daß der Körper (10) flachbandförmig ausgebildet ist.

4. Spritzschutz nach einem der vorhergehenden Ansprüche,
   dadurch **gekennzeichnet,**
   daß die Seitenflächen (11, 12) mit einer vorbestimmten Oberflächenrauhigkeit ausgebildet sind.

5. Spritzschutz nach einem der vorhergehenden Ansprüche,
   dadurch **gekennzeichnet,**
   daß die Seitenflächen (11, 12) mindestens abschnittsweise in einem Winkel zu allen übrigen Abschnitten des Körpers (10) verlaufen, der von 90° verschieden ist.

6. Spritzschutz nach einem der vorhergehenden Ansprüche,
   dadurch **gekennzeichnet,**
   daß auf der Außenfläche (40) örtlich begrenzte Abschnitte (13) mit vorbestimmter Oberflächenrauhigkeit vorgesehen sind.

7. Spritzschutz nach einem der vorhergehenden Ansprüche,
   dadurch **gekennzeichnet,**
   daß die Innenfläche (15) mit einem Material beschichtet ist, welches einen niedrigeren Brechungsindex aufweist als der Körper (10).

8. Spritzschutz nach einem der vorhergehenden Ansprüche,
   dadurch **gekennzeichnet,**
   daß die Außenfläche (14) des Körpers (10) mit einem durchsichtigen Material beschichtet ist, welches einen niedrigeren Brechungsindex aufweist als der Körper (10).

Fig. 1

Fig. 2

Fig. 3

Fig. 4

Fig. 5

Fig. 6

Fig. 7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y,A | BE-A-5 385 10 (BOSSAER)<br>* Seiten 2 - 5; Figur 1 *<br>— — — | 1,3 | B 62 J<br>6/20<br>B 62 B 15/00<br>F 21 V 8/00 |
| Y,A | EP-A-0 027 234 (SIEMENS)<br>* Seite 1, Zeile 6 - Seite 7, Zeile 12; Anspruch 1; Figuren 1-4 *<br>— — — | 1,2,7,8 | |
| D,A | DEZ TECHNISCHE RUNDSCHAU Nr.36/1988, Seite 15 Bayer-Forschung "Kunstoff sammelt Licht"<br>— — — | 1,7,8 | |
| D,A | DE-A-1 680 844 (THÜMMEL)<br>* Anspruch 1; Figuren 9-13 *<br>— — — — — | 1,3 | |

| RECHERCHIERTE SACHGEBIETE (Int. Cl.5) |
|---|
| B 62 J<br>B 62 B<br>F 21 V<br>G 02 B |

Der vorliegende Recherchenbericht wurde für alle Patentansprüche erstellt

| Recherchenort | Abschlußdatum der Recherche | Prüfer |
|---|---|---|
| Den Haag | 26 April 91 | DENICOLAI G. |